# EUROPEAN PATENT APPLICATION

(11) **EP 4 343 666 A1**
(43) Date of publication of application: **27.03.2024**
(21) Application number: 23197329.8
(22) Date of filing: 14.09.2023
(51) Int. Cl.: G06Q 40/03

(54) **SYSTEM, METHOD AND APPARATUS FOR OPTIMIZATION OF FINANCING PROGRAMS**

(30) Priority: 22.09.2022 US 202217950527
(71) Applicant: Affirm, Inc., San Francisco, CA 94108 (US)
(72) Inventor: Leoputera, Hanif, Long Island City (US); Sumathipala, Adriel, New York (US); Chen, Nelson, Austin (US); Lin, Ting Chih, San Francisco (US); Gupta, Niloy, San Francisco (US); Swiderski, Wojciech Piotr, San Francisco (US); Korukonda, Raghavendra Abhinay, Fremont (US); Joseph, Isaac, San Francisco (US)
(74) Representative: Piotrowicz, Pawel Jan Andrzej

(57) **Abstract**

A method for identifying a set of optimized financing programs to provide to a merchant may include receiving historical loan application data defining historical parameters associated with corresponding historical loan applications, replacing at least a portion of the historical parameters of the historical loan application data with new parameters associated with different loan terms to define a simulated loan data set defining simulated financing programs, determining a selection probability score for each of the simulated financing programs, the selection probability score indicating a likelihood of customer selection of each respective one of the simulated financing programs, determining a cash flow rating for each of the simulated financing programs, the cash flow rating estimating cash flow over time for the each respective one of the simulated financing programs, determining a valuation score based on the selection probability score and the cash flow rating of the each respective one of the simulated financing programs, and determining the set of optimized financing programs based on the valuation score of the each respective one of the simulated financing programs.

## Description

### TECHNICAL FIELD

Example embodiments generally relate to financial industry technologies and, in particular, relate to apparatuses, systems, and methods for determining an optimal set of financing program options to offer to merchants.

### BACKGROUND

The financial industry is comprised of many thousands of customers, merchants, lenders, borrowers, and other role players that all interact in various ways to enable customers to ultimately have access to goods and services provided by merchants. Credit and debit transactions have long been a way that individuals have managed point of sale transactions to ensure seamless transfer of funds from customers, or on their behalf, to merchants for relatively routine or small transactions. Meanwhile, obtaining a loan from a bank has long been the most common way of obtaining financing for non-routine or larger transactions. More recently, buy now, pay later financing has become a popular option.

In many of the cases above, a customer may apply for credit via an online system that intakes certain information, and then makes determinations regarding whether (and in some cases how) to extend credit to the customer. The application process is typically automated in some form in terms of gathering required information, making any needed checks or confirmations (e.g., regarding identity verification, account verification, creditworthiness, etc.), making a decision on the application, and distribution of funds or advancing a line of credit. The automation of the process necessarily involves the employment of algorithms and policies that can often be executed via software programming.

Keeping a credit network running sustainably often depends on the ability of a company to accurately assess the risk associated with extending credit to a given customer and estimate the performance of outstanding loans. However, these calculations often largely ignore merchants. It may be possible to improve the financial performance of the underwriter not only by determining customers to grant loans, and accurately predicting the performance of the loans, but by giving merchants the best possible tools or options for offering credit to their customers. Doing so may create a win-win scenario in which merchants can drive more business through the optimized financing programs they offer, and that increases volume also for the underwriter and satisfaction for the customer.

### BRIEF SUMMARY OF SOME EXAMPLES

Accordingly, some example embodiments may enable the provision of technical means by which to provide optimized financing program options to merchants.

In an example embodiment, a method for identifying a set of optimized financing programs to provide to a merchant may be provided. The method may include receiving historical loan application data defining historical parameters associated with corresponding historical loan applications, replacing at least a portion of the historical parameters of the historical loan application data with new parameters associated with different loan terms to define a simulated loan data set defining simulated financing programs, determining a selection probability score for each of the simulated financing programs, the selection probability score indicating a likelihood of customer selection of each respective one of the simulated financing programs, determining a cash flow rating for each of the simulated financing programs, the cash flow rating estimating cash flow over time for the each respective one of the simulated financing programs, determining a valuation score based on the selection probability score and the cash flow rating of the each respective one of the simulated financing programs, and determining the set of optimized financing programs based on the valuation score of the each respective one of the simulated financing programs.

In another example embodiment, an apparatus for identifying a set of optimized financing programs to provide to a merchant is provided. The apparatus may include processing circuitry. The processing circuitry may be configured for receiving historical loan application data defining historical parameters associated with corresponding historical loan applications, replacing at least a portion of the historical parameters of the historical loan application data with new parameters associated with different loan terms to define a simulated loan data set defining simulated financing programs, determining a selection probability score for each of the simulated financing programs, the selection probability score indicating a likelihood of customer selection of each respective one of the simulated financing programs, determining a cash flow rating for each of the simulated financing programs, the cash flow rating estimating cash flow over time for the each respective one of the simulated financing programs, determining a valuation score based on the selection probability score and the cash flow rating of the each respective one of the simulated financing programs, and determining the set of optimized financing programs based on the valuation score of the each respective one of the simulated financing programs.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for identifying a set of optimized financing programs to provide to a merchant according to an example embodiment;
FIG. 2 illustrates a functional block diagram of a financing program optimization platform according to an example embodiment;
FIG. 3 is a block diagram illustrating overall operation of the financing program optimization platform with respect to generating the set of optimized financing programs in accordance with an example embodiment;
FIG. 4 illustrates a scatter-plot of return on assets vs. take-up rate for a simulation of 8400 payment plans for a subset of merchants in accordance with an example embodiment;
FIG. 5 illustrates an example display interface screen that may be employed in accordance with an example embodiment; and
FIG. 6 illustrates a block diagram of a method of identifying a set of optimized financing programs to provide to a merchant in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a financing program optimization platform that can be instantiated at an apparatus comprising configurable processing circuitry. The processing circuitry may be configured to execute various processing functions on financial data using the techniques described herein. The financing program optimization platform may, for example, be configured to provide a way to determine an optimized set of financing programs to offer to a merchant to enable the merchant to offer one or more of the financing programs from the optimized set to prospective customers. The goal of the optimized set of financing programs may be to maximize appeal to customers and thereby drive volume or sales for the merchant, while also minimizing risk or maximizing revenue to the underwriter.

Unlike traditional pricing optimization, where the adjustable parameter is generally only the price of the product, a loan consists of many adjustable parameters. Examples of these parameters may include the number of loan terms offered, where the term length is the total time to repay the loan, term frequency (i.e., the frequency at which the loan is paid down), the interest rate for each term offered, and the merchant discount rate (MDR), which is the rate charged to the merchant to cover costs of offering loans (e.g., installment loans) to their customers. Each chosen value for one of those adjustable parameters may have its own corresponding risks. For example, offering a longer term might increase the take-up rate and the gross merchandise volume (GMV), but could also increase credit losses and thereby decrease cash flow over time. As a result, finding the best payment plan for a merchant to offer to customers is a multivariate optimization problem that is computationally expensive.

With just the five parameters listed above, millions of different combinations of financing programs may be offered. Thus, a system is needed for creating all desirable parameter combinations for computation of the corresponding impacts on business metrics. In other words, a system is needed that can identify the efficient frontier given a portfolio of billions of simulated loans. Example embodiments may provide such an efficient frontier identifier in the form of a financing program optimization platform 50 described herein. In this regard, in modern portfolio theory, the efficient frontier is the set of optimal financial assets that offer the highest expected return for a defined level of risk, or the lowest risk for a given level of expected return. When example embodiments are performed in the context of determining the best loan programs to offer customers (or to suggest that merchants offer their customers), the efficient frontier idea is therefore applied to the payment plan optimization context.

Since there is no closed-form mathematical solution to identify the efficient frontier for payment plan levers (or adjustable/variable parameters), example embodiments may aim to simulate billions of synthetic loans that use various combinations of loan parameters. In other words, simulations are run to explore the parameter space. Example embodiments may therefore enable computation of expected cash flow and loan volume using machine learning models for each set of parameters. One all projections are in hand, the efficient frontier can be identified as the set of optimal parameters that maximize return on assets (ROA) for a given GMV for a merchant (or vice versa, depending on the business objectives). Example embodiments may also enable solving the multivariate optimization problem discussed above by scaling computational resources.

The question could arise as to why it is not possible to just run an online experiment to identify an optimal parameter combination. Given the number of parameter combinations that are possible in this context (i.e., millions of combinations), it is not feasible to experiment with all payment plans. The efficient solution is therefore to filter the list of potential payment plans using a machine learning-powered simulation approach as described herein. Thereafter, an online experiment can be run to get the best of both worlds and have greater confidence in predictions, while also managing risk.

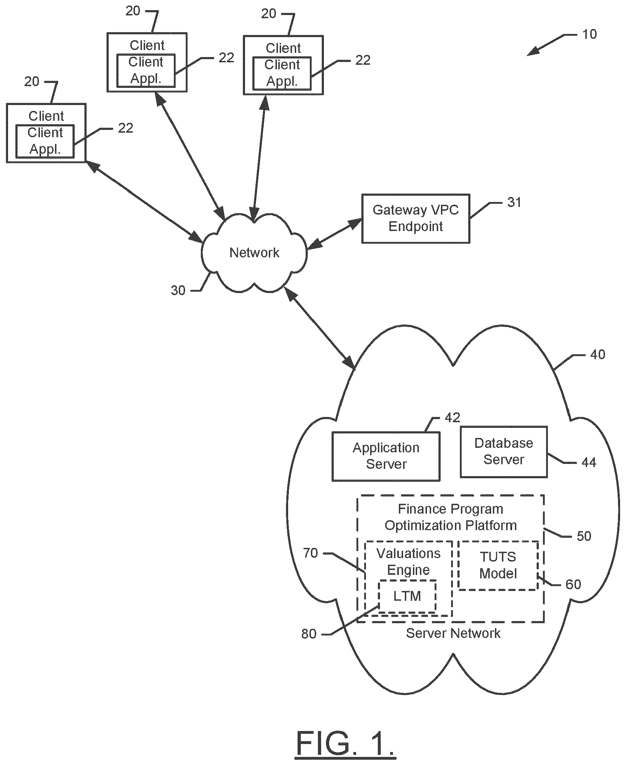

An example embodiment of the invention will now be described in reference to FIG. 1, which illustrates an example system in which an embodiment of the present invention may be employed. As shown in FIG. 1, a financing program management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement, employ or interact with example embodiments. Thus, in some embodiments, one or more of the clients 20 may be associated with an organization (e.g., a merchant) and may be located in different business units, branch offices, or other locations. In general, the clients 20 may be terminals or platform entities that are capable of interacting with example embodiments, and there could be as few as one, or a host of such terminals or entities. Moreover, in some cases, distributed computations, calculations, decisions, etc., may be made at respective ones of the clients 20.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or data/information for consumption/processing at the clients 20). As such, for example, the client application 22 may include corresponding executable instructions for configuring the client 20 to provide corresponding functionalities for modeling, sharing, processing and/or utilizing financial data and interacting with an underwriter as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols. In some cases, the other devices to which the clients 20 may be operably coupled via the network 30 may include customer communication devices (e.g., computer, a personal digital assistant (PDA), cellular phone, smart phone, tablet, or the like belonging to a customer who may be interested in purchasing goods from the merchant associated with one or more of the clients 20. The network 30 may also be operably coupled to a gateway virtual private cloud (VPC) endpoint 31 in some cases. The customer communication devices may have similar hardware to the clients 20 in some cases, and one of the clients 20 could represent an instance of the customer communication devices belonging to an individual customer.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices and, in some cases, could be embodied on a single computer. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to financing program optimization platform 50, and more particularly relating to facilitating financial computations and calculations related to modeling of cash flow and repayment of loans for each of multiple different financing program options where, for example, the loans may include a buy now, pay later loan, or other products associated with credit or lending transactions. For example, the application server 42 may be configured to provide (via the financing program optimization platform 50) execution of instructions, and storage of information descriptive of events or activities, associated with the financing program optimization platform 50 and the execution of financial computations, calculations and modeling on behalf of a user of the system 10 located at one of the clients 20 in real time. In some cases, the financial computations, calculations and modeling may be associated with financing programs that ultimately are offered to customers in association with executing a financial transaction that may include obtaining financing (such as an installment loan), and the activities associated therewith. Thus, example embodiments support the provision of a set of options for different instances of a loan/product that can be offered to a customer to cause the customer to submit a loan application detailing information required by the lender or underwriter (and operator of the financing program optimization platform 50) to determine whether credit, funds, promotions, or other products can be provided to the customer based on information provided in the loan/product application. However, example embodiments may also apply to other types of loans.

In some embodiments, the financing program optimization platform 50 may be a technical device, component or module affiliated with the underwriter/lender or an agent of the lender. Thus, the financing program optimization platform 50 may operate under control of the lender or agent of the lender to be a technical means by which to carry out activities under direction of the lender/agent or employees thereof. As such, in some embodiments, the clients 20 may access the financing program optimization platform 50 services, and more particularly contact the financing program optimization platform 50 online and utilize the services provided thereby. However, it should be appreciated that in other embodiments, an application (e.g., the client application 22) enabling the clients 20 to interact with the financing program optimization platform 50 (or components thereof) may be provided from the application server 42 (e.g., via download over the network 30) to one or more of the clients 20 to enable recipient clients 20 to instantiate an instance of the client application 22 for local operation such that the financing program optimization platform 50 may be a distributor of software enabling individual users to utilize the financing program optimization platform 50. Alternatively, another distributor of the software may provide the client 20 with the client application 22, and the financing program optimization platform 50 may communicate with the client 20 (via the client application 22) after such download.

In an example embodiment, the client application 22 may therefore include application programming interfaces (APIs) and other web interfaces to enable the client 20 to conduct operations as described herein via the financing program optimization platform 50. The client application 22 may include a series of control consoles or web pages including a landing page, onboarding services, activity feed, account settings (e.g., user or merchant profile information), transaction management services, payment management services and the like in cooperation with a service application that may be executed at the financing program optimization platform 50. Thus, for example, the client application 22 may enable the user or operator to articulate and submit queries, run modeling algorithms, execute budgeting functions, and/or the like using the financing program optimization platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the financing program optimization platform 50 configured to operate in accordance with an example embodiment of the present invention. In this regard, for example, the financing program optimization platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the financing program optimization platform 50. Thus, it should be appreciated that the functions of the financing program optimization platform 50 can be conducted via client-server based interactions involving communications between clients 20 and the server network 30, or may be conducted locally at one of the clients 20 after an instance of the financing program optimization platform 50 is downloaded (e.g., via or as the client application 22) locally at the corresponding one of the clients 20.

As such, the environment of FIG. 1 illustrates an example in which provision of data, content and information associated with the financial industry may be accomplished by a particular entity (namely the financing program optimization platform 50 residing at the application server 42 or at one of the clients 20). Thus, the financing program optimization platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the financing program optimization platform 50 may operate to enable the user associated with a given one of the clients 20 to receive financing program options (e.g., a set of financing programs) that have been selected intelligently to be optimal for the given one of the clients 20. In other words, the financing program optimization platform 50 may generate the set of financing programs that are to be sent to the given one of the clients 20 after performing an optimization algorithm that is configured to select the set of financing programs which, after selection, become a set of optimized financing programs for the given one of the clients 20. In some example embodiments, the client application 22 may be used in connection with running queries, models, experiments or calculations that are then used as the basis for determining the set of optimized financing programs in relation to a request for, or recommendation of, financing programs the underwriter is willing to offer to the organization associated with the given one of the clients 20 under control of the financing program optimization platform 50. In this regard, for example, the client application 22 may be used to engage (e.g., via a website and corresponding APIs) with the financing program optimization platform 50 to request or select individual financing programs (e.g., financial products, loans, or types of loans) to offer to customers for completing transactions with the given one of the clients 20. The transactions themselves may also be conducted using services associated with the financing program optimization platform 50, but doing so is not necessary. The financing program optimization platform 50 may prompt the client 20 to provide information about the products or industry to which the financing programs will likely be applied by customers, and may request information about the given one of the clients 20, the customers, or other information associated with the financial transactions that are to be financed. In other words, the client 20 may provide a user interface function for interacting with the financing program optimization platform 50 to identify the information that will be evaluated using the financing program optimization platform 50 to generate the set of optimized financing programs.

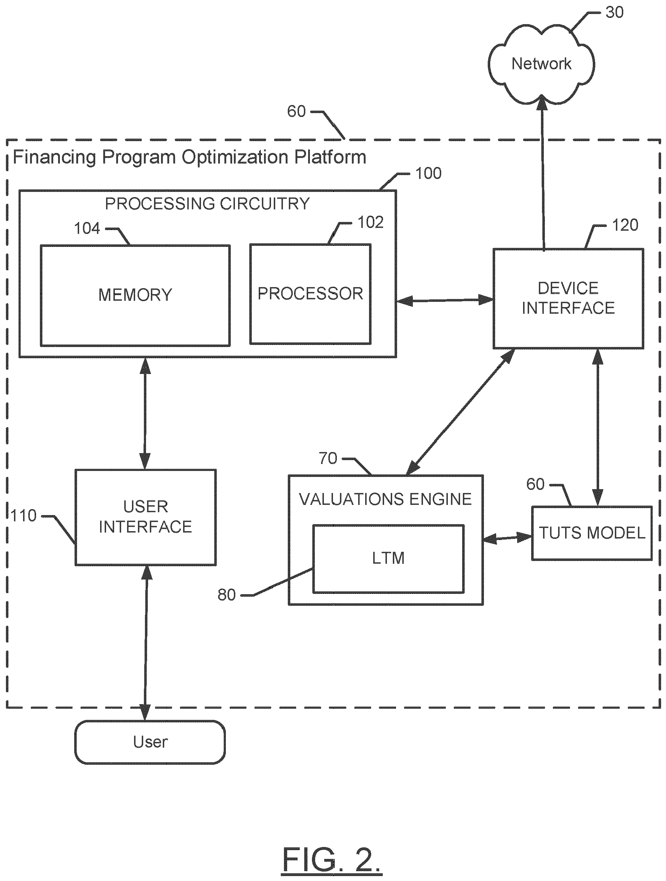

Regardless of how the queries, calculations or modeling activities are initiated, the financing program optimization platform 50 of FIG. 1 may be used to manage execution of such activities. Each of these activities may have its own respective timing and calculations and communications that are facilitated by the financing program optimization platform 50 and various components of the financing program optimization platform 50 may be conducted in parallel. The components, which may be functional modules that operate via API or function calls to respective segmented platforms or a monolith or other collection of rules, policies, instructions, or the like. In an example embodiment, the financing program optimization platform 50 may include, host or otherwise be operably coupled to various models and/or engines for performing specific functions associated with the overall function of generating the set of optimized financing programs. In an example embodiment, such models or engines may include a take-up and term selection (TUTS) model 60, and a valuations engine 70, which may further include or be operably coupled to a loan transition model (LTM) 80. Some of the specific components or structures associated with the financing program optimization platform 50 of an example embodiment will be described in reference to FIG. 2 below.

FIG. 2 shows certain elements of an apparatus for provision of the financing program optimization platform 50 or other processing circuitry according to an example embodiment. The apparatus of FIG. 2 may be employed, for example, as the financing program optimization platform 50 itself operating at, for example, a network device, server, proxy, or the like (e.g., the application server 42 or client 20 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42) or by devices in a client/server relationship (e.g., the application server 42 and one or more clients 20). Thus, although FIG. 2 illustrates the financing program optimization platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating provision of a set of optimized financing programs to a merchant (e.g., at one of the clients 20) is shown. In this regard, the financing program optimization platform 50 may be configured to perform analysis, modeling, experimentation or other determinations based on the signaling and/or the information provided to determine the set of optimized financing programs to offer a particular merchant. The apparatus may be an embodiment of the financing program optimization platform 50 and/or modules thereof or a device of the application server 42 hosting the financing program optimization platform 50 and/or modules thereof. As such, configuration of the apparatus as described herein may transform the apparatus into the financing program optimization platform 50 and modules thereof. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU), or any other processing device. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located (e.g., at one of the clients 20, or at another device).

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the financing program optimization platform 50 and/or modules thereof, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the financing program optimization platform 50 or modules thereof as described below.

The financing program optimization platform 50 may be configured to include tools to facilitate the selection of individual loans or groups of loans (e.g., by product, loan type, or any other grouping) for which a combination of factors including likelihood or probability of customer selection (e.g., attractiveness of loan features to customers) and loan repayment probability information is desirable, along with profitability of the loan to the underwriter, and tools for the calculation of such probabilities and/or profitability. The tools may be provided in the form of various modules (or submodules) that may be instantiated by configuration of the processing circuitry 100. FIG. 2 illustrates some examples of modules that may be included in the financing program optimization platform 50 and that may be individually configured to perform one or more of the individual tasks or functions generally attributable to the financing program optimization platform 50 according to an example embodiment. However, the financing program optimization platform 50 need not necessarily be modular. In cases where the financing program optimization platform 50 employs modules, the modules may, for example, be configured to perform the tasks and functions described herein. In some embodiments, the financing program optimization platform 50 and/or any components, modules or sub-modules comprising the financing program optimization platform 50 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the financing program optimization platform 50 and/or any modules thereof, as described herein.

As shown in FIG. 2, the financing program optimization platform 50 may include submodules such as the TUTS model 60, the valuations engine 70, and the loan transition model 80. Each such submodule may be associated with specific functions or functionality for which the corresponding module has been configured (e.g., by a combination of hardware and/or software). However, as noted above, it should be appreciated that such functions need not necessarily be segmented into specific or separate modules, and code, instructions, or functional elements of any or all of the submodules could be shared or collocated in varying degrees in various examples. Nevertheless, the descriptions that follow, which divide the functions into respective component submodules, are provided for illustrating a convenient or possible way to instantiate one example embodiment.

The TUTS model 60 may define a model for effectively determining customer loan parameter preferences. In this regard, for example, the TUTS model 60 may be configured to, based on data indicative of historical consumer activity with respect to the many loans and loan parameters that have been offered previously, model customer behavior relative to possible combinations of loan parameters associated with hypothetical loan packages, financing programs, or financing options. In an example embodiment, the TUTS model 60 may determine a probability score or probability weighting factor to assign to loan parameters and combinations of loan parameters (defining respective financing programs) that is intended to be indicative of the probability of customer selection of the corresponding loan parameters or combinations thereof. This probability score, since it is correlated with loan and parameter selection probability, may be referred to as a selection probability score. For example, zero percent financing is often a popular customer loan option. Thus, a zero percent financing option may have a high selection probability score associated therewith. However, the zero percent financing option cannot typically be offered for very long loan terms, or without some sort of merchant charge, since risks and costs associated with issuing such a loan must be accounted for, and may increase over time for a long loan. Thus, other combinations involving term length and merchant charges may also be combined with zero percent financing (or other financing interest rates) with corresponding selection probability scores for respective combinations of parameters of a loan defining a simulated loan option or simulated loan program. As will be seen below, the selection probability score for each respective simulated loan program may be factored in with a cash flow rating (e.g., from the loan transition model 80) via a valuation score (e.g., from the valuations engine 70) to help determine which loan options should form the set of optimized financing programs (or options) to offer to a merchant associated with one of the clients 20.

In some examples, the TUTS model 60 may be formed by reviewing massive amounts of loan data indicative of the terms offered for loans, and the rate of selection of the terms by customers to define a transfer function for determining a probability of term selection for hypothetical loan parameters that may be fed into the model. The model itself may be experimented with periodically, or may be a selected one of a plurality of different experimental models. The experimental models may continuously or periodically be tested or used and compared to updated actual data to determine or rank the models based on performance (i.e., based on which models made probability determinations that were closest to the actual data witnessed over time). The highest ranking model may be employed as the TUTS model 60, and the specific model used at any given time as the TUTS model 60 may be the selected one of the plurality of different experimental models that has the highest ranking at any given time. New models may be added for experimentation, and existing models may be updated and modified over time as well based on experimentation results, or to test new ideas of accurate ways to model customer behavior. However, in other cases, the TUTS model 60 may be static or fixed model that is manually modified by operators based on off-line data study, or for other reasons. The TUTS model 60 could also be structured, operate or be employed in alternative ways to those described above as well.

The loan transition model 80 may be configured to model, on a loan-by-loan basis, the probability of transitioning into any of various states of a loan from a current state. The states may correspond to a likelihood of repayment for the underwriter, and may also account for the timing of such repayment. Thus, the loan transition model 80 may not only enable the modeling of specific loans and the transitions such loans encounter, but also enable (e.g., when aggregated) the underwriter to understand what future cash flow is likely to be for a set of loans and to better plan operations based on that future cash flow. The loan transition model 80 may be an example of the loan transition model technology described in U.S. Application Serial No. 17/355,725 entitled "System, Method and Apparatus for Modeling Loan Transitions" filed on June 23, 2021, the contents of which are incorporated herein by reference in their entirety. The loan transition model 80 may operate to, for example, determine the cash flow rating mentioned above for each hypothetical loan (or financing option) considered by the loan transition model 80. The cash flow rating may consider the likelihood of receiving payment at each stage of the life of the loan, and therefore the corresponding cash flow over time likely to generate from the loan if offered by a merchant and accepted by a customer.

Like the TUTS model 60, the loan transition model 80 may be one of a plurality of different models that may be employed at any given time. The different models may be experimental and/or experimented on continuously or periodically, and may be updated or modified at any desirable periodicity. Thus, the TUTS model 60 and/or the loan transition model 80 may routinely be calibrated, refined or otherwise modified. Such modifications may change the overall performance of the financing program optimization platform 50 when they occur, so it should be appreciated that the system described herein is very dynamic and routine examination of the performance may be continuously performed and learned from over time. Thus, even though the financing program optimization platform 50 aims to perform optimized financing program selection each time it operates, the dynamic nature of the platform means that the optimization quality may also experience an overall increase over time though not necessarily a consistently increasing improvement at all times.

The valuations engine 70 may be configured to consider the candidate loan parameters or financing options that have been evaluated by the TUTS model 60 and the loan transition model 80 to apply a valuation to each based on a combination of the selection probability score and the cash flow rating of each candidate. A result of the valuations engine 70 may therefore be a valuation score that balances the likelihood of customer selection (indicated by the selection probability score) with the probability of generating cash flow at each stage of the life of the loan (indicated by the cash flow rating).

The experimentation described above may, in some cases, involve experimenting with financing packages (or financing options) to find the most optimal financing packages focusing on profitability, or other features, as the goal of such optimization. Such experimenting may involve complicated models and experiments that take a long time (e.g., months) to converge. These lengths of time may render the experimentation less useful in some contexts, particularly where real time or quick updating and action is essential since the faster experimentation can be finished, the faster a switch to a better system may be accomplished. Thus, it may be desirable to further configure the financing program optimization platform 50 to perform faster experimentation in some embodiments. To achieve increases in the speed of experimentation, a multi-armed bandit (MAB) may be provided by the financing program optimization platform 50 to allow for dynamic traffic allocation in experiments, which may speed up experiment convergence and adapt to changes in external environments via a perpetual learning system. Applications of the MAB may include dynamic experimentation for checkout flows, repayment messages, financing programs, and pure exploration.

A MAB is a simple, but powerful, framework for defining algorithms that make decisions over time under conditions of uncertainty. A MAB is derived from a hypothetical gambler at a row of slot machines (or "one-armed bandits"), where each arm of each slot machine, when pulled, may give a payout but the amount and distribution of that payout is unknown. The gambler has the task of optimizing the payout they will take home through experimentation.

MABs have found favor in many different contexts associated with solving optimization problems. In this context, the MAB that may be operated by the financing program optimization platform 50 may assist in defining testing to determine which user interface (UI) widget (e.g., webpage, button, color, etc.) to use for engaging with the user for various tasks. When using the MAB algorithm, the algorithm will adapt to changing optimum conditions even if the best cohort changes over time. More importantly, the MAB algorithm will dynamically adjust the traffic to the cohort based on feedback, thereby converging to the optimal result faster. The MAB algorithm can also be used for exploration by underwriting teams for various tasks such as, for example, approving loans of different sets of individuals to evaluate other approval strategies. In this regard, there is a cost associated with approving loans that are more likely to enter delinquency. Instead of optimizing the MAB for loan volume, the MAB algorithm can be tuned for cost. In other words, the experiment can have a budget and can enable exploration of the feature space (biasing exploration in favor of exploitation) to collect rich data.

In the context of improving checkout flows, employing the MAB algorithm may offer an adaptive solution to decide which funnel to send a given user to, or what message content to send a user who is in a particular context or situation (e.g., a user who has a payment due). Additional information about the user can be fed into the MAB algorithm such as user location, demographic information, device type, etc., in order to improve operation of the MAB algorithm. The MAB algorithm may also be used to automate discovering the optimal financing program for a merchant. The MAB algorithm may be used in conjunction with the offline analysis done by analysts in merchant pricing and quantitative markets. What makes the problem of dynamic pricing interesting is that the learner never actually observes the true price of a product, only the binary signal that the price is too low or high. There is also a monotonicity structure in pricing. For example, if a user took a loan for 10% APR they would surely take out the loan at 5% APR. But whether they would take the loan at 11% APR is uncertain. This can be integrated into a type of self-service system where the system can optimize the financing programs that are to be provided to a merchant for offering to customers.

The MAB algorithm may take a number of different structures or forms. In one example form, the MAB algorithm may be implemented in conjunction with an architectural experience program (AXP). Experiments and variants may be defined via an AXP portal in such cases. Thompson Sampling may be a popular choice for implementing an MAB algorithm to improve convergence bounds, and provide better empirical performance as compared to other algorithms. After each iteration, e.g., after collecting a day's worth of feedback from AXP metrics, various arm weights may be updated using Thompson Sampling and traffic may be assigned to cohorts based on the weights of the arm. A success metric may then be defined for each experiment and success and trials for each arm in the MAB may be recorded in AXP metrics. If a success (e.g., if the user takes up the corresponding loan) is not available in AXP metrics, then the success may be sourced from logs, parquet snapshots, Yoda condition logs, etc. The entire MAB system may be an offline batch framework, which may be scheduled at a desired cadence for each experiment. Other tools may also be used to schedule individual jobs or tasks of the MAB algorithm. Interfaces may also be defined for arm updating, and for reward aggregation to allow definition of success metrics and data sources. By employing the MAB algorithm, as noted above, convergence of the experimentation may occur much more quickly.

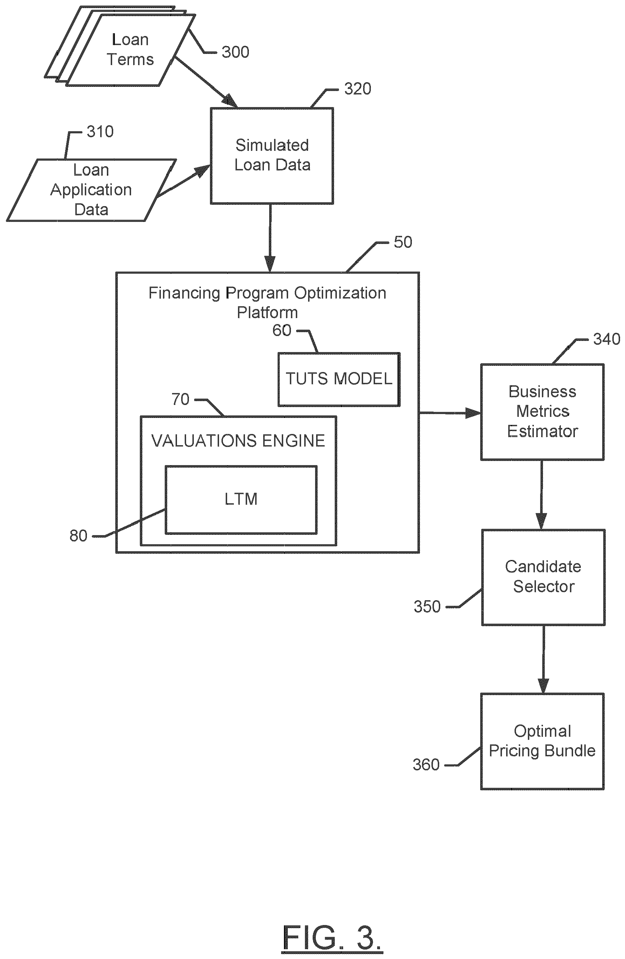

FIG. 3 is a block diagram illustrating overall operation of the financing program optimization platform 50 with respect to generating the set of optimized financing programs in accordance with an example embodiment. As shown in FIG. 3, a plurality of different loan terms 300 (or financing programs) may be provided along with historical loan application data 310 to define simulated loan data 320, which may in some cases include cart floors (e.g., cart value minimum levels). The historical loan application data 310 may represent, for example, massive amounts (e.g., hundreds of thousands or even millions) of historical loans. Meanwhile the loan terms 300 may represent new loan terms (or financing programs) that can be replaced or substituted for corresponding components of the historical loan application data to form the simulated loan data 320 that is actually fed into the financing program optimization platform 50. As an example, if 200,000 historical loans were used as the historical loan application data 310, and 1000 different payment plans were desired for study and submitted as the different loan terms 300, then a total of 2 billion simulated loan applications would form the simulated loan data 320.

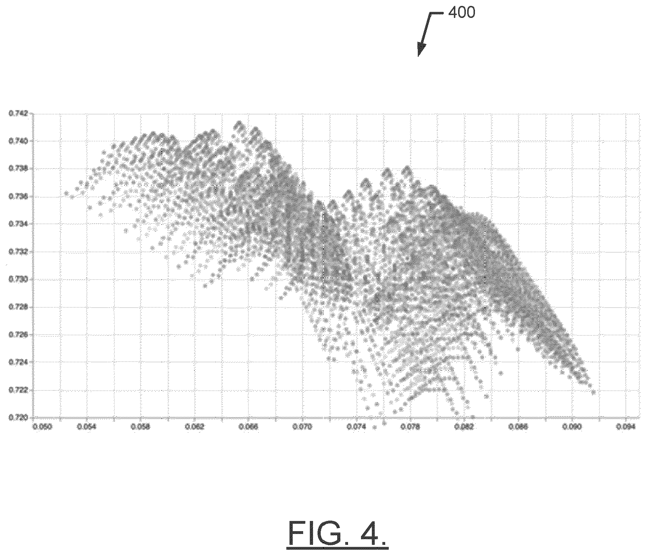

The financing program optimization platform 50 may operate on the simulated loan data 320 as described above in reference to FIG. 2 in order to generate a valuation score for each of the loan parameters or financing programs considered. Thereafter, a business metrics estimator 340 may operate to estimate business metrics associated with each of the loan terms or financing programs based on the valuation score, and any business logic provided in the business metrics estimator 340 to augment the valuation score. The business logic provided by the business metrics estimator 340 may consider other business costs, objectives or profitability goals of the underwriter to modify the valuation scores of each of the loan terms or financing programs evaluated and determine a performance rating or ranking. The business metrics estimator 340 may therefore, for example, combine the valuation scores with the revenues and costs of the corresponding loans to estimate a return on assets (ROA) and gross merchandise volume (GMV), which may correlate to the performance rating. The performance rating may then be employed by a candidate selector 350 to generate an optimum pricing bundle 360, which may include the set of optimized financing programs. FIG. 4 illustrates a scatter-plot of ROA vs. take-up rate for a simulation of 8400 payment plans for a subset of merchants. The candidate selector 350 may be configured to employ constraints defined for experiment candidate pricing bundling in order to generate the optimum pricing bundle 360, and may operate iteratively. Thus, for example, numerous different experimental applications of constraints or sets of constraints may be employed by the candidate selector 350 to define the best set of loan terms or financing programs to form a pricing bundle of financing program options that form the set of optimized financing programs that the financing program optimization platform 50 is intended to generate.

In an example embodiment, the candidate selector 350 and/or the business metrics estimator 340 may be modules of the financing program optimization platform 50 (and therefore be powered from the same processing circuitry 100). However, in other cases, the candidate selector 350 and/or the business metrics estimator 340 may be separate modules with corresponding separate instances of processing circuitry. In either case, the financing program optimization platform 50 and modules thereof, or operably coupled thereto, may be dynamically modified by running different experiments that may employ different models to attempt to efficiently find the best options for financing programs to offer to a merchant, which the merchant may then in turn offer to customers of the merchant.

Moreover, in some cases, and particularly in cases where large amounts of payment plans are being considered, simulation scaling may be performed to lower computational loads. Simulation scaling may be performed by scaling the simulations to be performed with in-memory distributed computation tools, algorithmic optimizations, and engineering best practices. In some cases, monotonicity constraints may also be added to models in order to ensure that the models do not overfit to noise and do not violate basic financial assumptions.

The models and/or modules may be modified to favor various goals or initiatives of the merchants in some cases. For example, the business metrics estimator 340 (or another module of the financing program optimization platform 50) may include inputs that enable the merchant to select loan terms or financing programs that drive volume (e.g., zero percent financing options) or select loan terms or financing programs that maximize profit (e.g., favorable loan terms or financing programs for specific high margin brands or product lines).

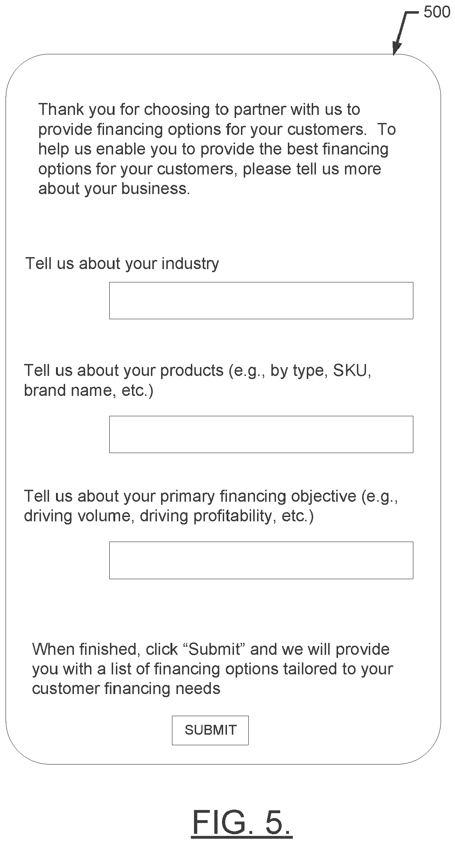

In an example embodiment, the business metrics for each merchant may be different, and input from the respective merchants may be obtained via exchange of messages with the client 20 of the merchant. Thus, for example, a display may be presented at the client 20 to solicit input from the client 20 that can be used in determining the set of optimized financing programs. FIG. 5 illustrates one example of a displayed interface screen 500 at one of the clients 20. As can be appreciated from FIG. 5, general information about the merchant may be provided, such as input regarding the industry in which the merchant operates. Product information from brand names, product types, or even information down to the stock keeping unit (SKU) level may be provided in some cases. Other information regarding specific goals or objectives of the merchant may also be provided. In the example of FIG. 5, such information is obtained via text boxes, but other entry methods or modes may alternatively be employed such as drop down, or other menu selections, slider bars, etc.

Unlike conventional systems, which generally simply push options to merchants that are generated in the best interests of the underwriter, example embodiments provide a technical means by which to ensure that a balance of party interests are considered. In this regard, example embodiments provide historical data analysis that shows likely customer behaviors reflective of their collective interests, that provides technical means to solicit input from the merchant regarding merchant interests, and then employs technical means to compute future states likely to ensue when various options are launched to account for the underwriters interests. The communications and calculation tools, which are needed to bring this complex collection of information together, to process the information (which is itself a computational challenge), and complete the circuit of communication needed to promulgate the optimized options represents a collaborative balancing of interests that is only possible when the particular technical tools and interfaces described herein are employed. Without the hardware and programmed software described herein, the needed exchanges and processing of information cannot be used to achieve this unique balancing of interests and valuable result. The result, which empowers merchants to meet their goals, by considering options most likely to be attractive to customers in balance with their interests and underwriter interests, creates a technical means by which to create a win-win scenario for all participants in the system.

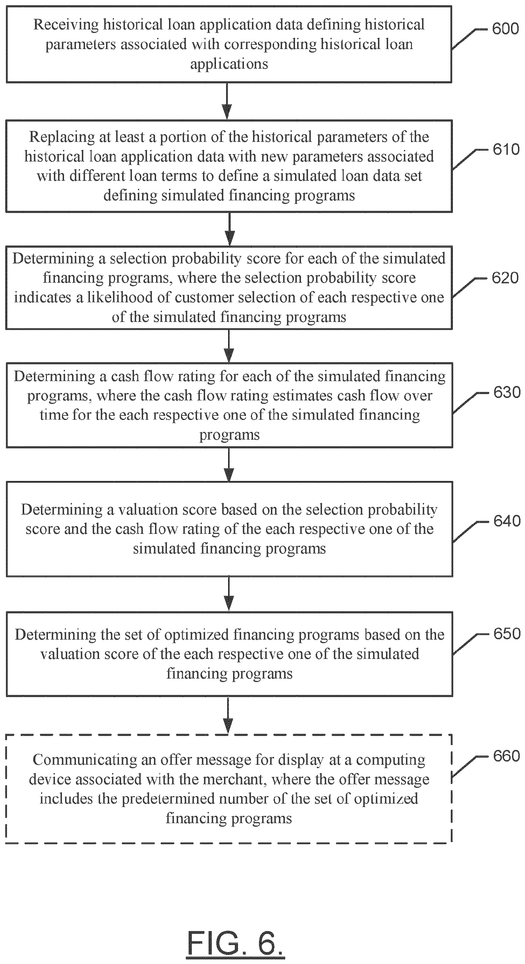

From a technical perspective, the financing program optimization platform 50 described above may be used to support some or all of the operations described above. As such, the apparatuses described in FIGS. 1-3 may be used to facilitate the implementation of several computer program and/or network communication based interactions. As an example, FIG. 6 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of method for identifying a set of optimized financing programs to provide to a merchant (e.g., to enable the merchant to provide such programs to customers) according to one embodiment of the invention is shown in FIG. 6. The method may include receiving historical loan application data defining historical parameters associated with corresponding historical loan applications at operation 600 and replacing at least a portion of the historical parameters of the historical loan application data with new parameters associated with different loan terms to define a simulated loan data set defining simulated financing programs at operation 610. The method may further include determining a selection probability score for each of the simulated financing programs at operation 620, where the selection probability score indicates a likelihood of customer selection of each respective one of the simulated financing programs. The method may also include determining a cash flow rating for each of the simulated financing programs at operation 630, where the cash flow rating estimates cash flow over time for the each respective one of the simulated financing programs. The method may also include determining a valuation score based on the selection probability score and the cash flow rating of the each respective one of the simulated financing programs at operation 640, and determining the set of optimized financing programs based on the valuation score of the each respective one of the simulated financing programs at operation 650. In some cases, the method may also include receiving business metrics defining goals or objectives of the merchant relative to determining the set of optimized financing programs in order to assist in determining a performance rating or ranking that is tailored to the merchant. The receipt of the business metrics may be via message exchange initiated through display of messages at the client 20 of the merchant.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, the method may further include determining the set of optimized financing programs by applying business metrics to the valuation score to account for revenue and cost objectives for the each respective one of the simulated financing programs. In an example embodiment, determining the set of optimized financing programs may include ranking a result of the applying the business metrics to the valuation score based on estimated return on assets or gross merchandise volume to define a performance rating for the each respective one of the simulated financing programs. In some cases, determining the set of optimized financing programs may include generating the set of optimized financing programs as a predetermined number of the each respective one of the simulated financing programs having a highest performance rating. In an example embodiment, the method may further include communicating an offer message for display at a computing device associated with the merchant, where the offer message includes the predetermined number of the set of optimized financing programs at operation 660. In some cases, determining the selection probability score may include applying the each of the simulated financing programs to a take-up and terms selection model to determine the selection probability score. In an example embodiment, the take-up and terms selection model may be dynamically adjusted over time using machine learning. In some cases, determining the cash flow rating may include applying the each of the simulated financing programs to a loan transition model to determine the cash flow rating. In an example embodiment, the loan transition model may be dynamically adjusted over time using machine learning. In some cases, determining the selection probability score, determining the cash flow rating, and determining the valuation score may each be performed using simulation scaling.

In an example embodiment, an apparatus for performing the method of FIG. 6 above may comprise a processor (e.g., the processor 102) or processing circuitry configured to perform some or each of the operations (600-660) described above. The processor may, for example, be configured to perform the operations (600-660) by performing hardware implemented logical functions, executing stored instructions, or executing algorithms for performing each of the operations. In some embodiments, the processor or processing circuitry may be further configured for additional operations or optional modifications to operations 600 to 660.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for identifying a set of optimized financing programs to provide to a merchant, the method comprising:
receiving historical loan application data defining historical parameters associated with corresponding historical loan applications;
replacing at least a portion of the historical parameters of the historical loan application data with new parameters associated with different loan terms to define a simulated loan data set defining simulated financing programs;
determining a selection probability score for each of the simulated financing programs, the selection probability score indicating a likelihood of customer selection of each respective one of the simulated financing programs;
determining a cash flow rating for each of the simulated financing programs, the cash flow rating estimating cash flow over time for the each respective one of the simulated financing programs;
determining a valuation score based on the selection probability score and the cash flow rating of the each respective one of the simulated financing programs; and
determining the set of optimized financing programs based on the valuation score of the each respective one of the simulated financing programs.

2. The method of claim 1, wherein determining the set of optimized financing programs further comprises applying business metrics to the valuation score to account for revenue and cost objectives for the each respective one of the simulated financing programs.

3. The method of claim 2, wherein determining the set of optimized financing programs further comprises ranking a result of the applying the business metrics to the valuation score based on estimated return on assets or gross merchandise volume to define a performance rating for the each respective one of the simulated financing programs.

4. The method of claim 3, wherein determining the set of optimized financing programs further comprises generating the set of optimized financing programs as a predetermined number of the each respective one of the simulated financing programs having a highest performance rating.

5. The method of claim 4, further comprising communicating an offer message for display at a computing device associated with the merchant, the offer message including the predetermined number of the set of optimized financing programs.

6. The method of claim 1, wherein determining the selection probability score comprises applying the each of the simulated financing programs to a take-up and terms selection model to determine the selection probability score.

7. The method of claim 6, wherein the take-up and terms selection model is dynamically adjusted over time using machine learning.

8. The method of claim 1, wherein determining the cash flow rating comprises applying the each of the simulated financing programs to a loan transition model to determine the cash flow rating.

9. The method of claim 8, wherein the loan transition model is dynamically adjusted over time using machine learning.

10. The method of claim 1, wherein determining the selection probability score, determining the cash flow rating, and determining the valuation score are each performed using simulation scaling.

11. An apparatus for identifying a set of optimized financing programs to provide to a merchant, the apparatus comprising processing circuitry configured to perform the method of any of claims 1-10.
